# EUROPÄISCHE PATENTANMELDUNG

(11) **EP 2 045 078 A2**
(43) Veröffentlichungstag der Anmeldung: **08.04.2009**
(21) Anmeldenummer: 08158450.0
(22) Anmeldetag: 18.06.2008
(51) Int. Cl.: B41F 33/00, H01G 7/02

(54) **Elektrete und deren Einsatz in Druckmaschinen**

(30) Priorität: 04.07.2007 DE 102007031057
(71) Anmelder: manroland AG, 63075 Offenbach/Main (DE)
(72) Erfinder: Dr. Kremer, Ruth, 61449, Steinbach (DE); Walther, Thomas, 63067, Offenbach (DE)

(57) **Zusammenfassung**

Die Erfindung betrifft eine Druckmaschine mit mindestens einer Druckform, die auf einem Druckformzylinder gespannt, geklebt oder als Sleeve (Hülsendruckform) ausgeführt ist und mindestens einer Farbauftragwalze zum Einfärben der Druckform. Die Beistellung der Farbauftragwalze gegenüber der Druckform erfolgt über einen mechanischen, elektrischen oder piezoelektrischen Aktuator erfolgt.

Zur einfacheren und schneller Einstellung der Auftragwalzen ist vorgesehen, die Beistellung von Farbauftragwalzen gegenüber der Druckform oder aber ein Kraftäquivalent der Beistellung mittels einer piezoelektrischen Elektretfolie (1) zu erfassen. Die Elektretfolie ist dabei als eine zellulare polymere Elektretfolie (1) ausgebildet und innerhalb der polymeren Elektretfolie (1) sind Zellen (2) mit Dipolladungen vorgesehen.

## Beschreibung

Die Erfindung betrifft den Einsatz von Elektreten in Druckmaschinen zur flächigen Kraft- / Beistellungsmessung, speziellen Druckmaschinenelemente, die Elektrete enthalten und Verfahren zum Betrieb einer Druckmaschine, die Elektrete als Bauelement enthalten.

Elektrete sind Materialien mit einer permanenten elektrischen (elektrostatischen) Polarisation, ähnlich der permanenten magnetischen Polarisation bei ferromagnetischen Stoffen. Als Materialien zur Herstellung von Elektreten eignen sich besonders solche, die gute elektrisch isolierende Eigenschaften (Dieelektrika) haben. Aufgrund ihrer hohen elektrischen Eigenschaften und der guten Prozessierbarkeit eignen sich polymere Werkstoffe besonders für die Herstellung von Elektreten.

In den letzten Jahren wurden polymere Elektrete immer weiter entwickelt, so dass die anfängliche hohe Empfindlichkeit gegen Feuchtigkeit und Temperaturschwankungen überwunden wurde. Heute sind polymere Elektrete herstellbar, die eine ausgezeichnete Dauerstabilität aufweisen. Polymere Elektrete sind auch in verschiedenen Dicken, von wenigen Mikrometern bis zu mehreren Millimeter erhältlich.

Polymere Elektrete werden polarisiert, indem man das Material durch Erhitzen, Anlegen eines elektrischen Hochspannungsfeldes und Kühlen des Materials, während es noch unter dem Einfluss des elektrischen Hochspannungsfeldes steht, anregt. Am häufigsten werden Elektrete durch Coronaaufladung gewonnen, prinzipiell sind aber auch die triboelektrische Aufladung (z.B. durch Reibung) oder jede andere Aufladungstechnik denkbar.
Polymere Elektrete finden heute meist Anwendung In Mikrophonen, um mechanische Schwingungen / Belastungen in elektrische Spannung umzuwandeln. Ein weiteres sehr verbreitetes Anwendungsgebiet von Elektreten sind Filter für Feinstäube.

Neuartige polymere Elektrete mit zellularer Struktur zeigen nach geeigneter elektrischer Aufladung hohe piezoelektrische Effekte. Eingesetzt werden Polymere, die eine geschlossene Zellenstruktur aufweisen. Die Zellenstruktur kann in bekannter Weise durch Schäumen des Polymers erzeugt werden. Als Schäumverfahren kommt dabei chemisches Schäumen oder Schäumen von Polymeren mit überkritischen Gasen, zum Beispiel CO₂ (Kohlendioxid), zur Anwendung. Piezoelektrische Polymere gestatten daher die Entwicklung großflächiger und in weiten Parameterbereich beliebig geformter Sensoren und Aktuatoren.

Durch die Corona- oder Plasmaentladung wird in den Zellen 2 (Hohlräumen) des polymeren Schaums ein permanenter makroskopischer Dipol geschaffen (siehe auch Figuren). Meist werden die Zellen (Hohlräume) durch biaxiale oder monaxiale Streckung zu Zellen 2 mit diskus- oder linsenförmiger Struktur verstreckt. An den äußeren Lagen der polymeren Elektrete, die vorzugsweise eine geschlossene Oberfläche 3 aufweisen, sind Elektroden angebracht. Durch eine Stauchung (Druckspannung 4) der polymeren Elektretfolie 1 kommt es zu einer Veränderung der Ladungsdichte und somit zu Piezoelektrizität, die über die Elektroden 5 abgegriffen werden kann (siehe auch Figuren).

Geeignete Polymere für die Herstellung von polymeren Elektreten sind Polyolefine, z.B. Polypropylen oder Polyethylen, Polykondensate, z.B. Polyamide, Polyester, Polycarbonate oder Polyacrylate, Polyacetale, Polyimide, Celluloseester, Polystyrole, Fluorpolymere, Polyphenylsulfid und andere geeignete Polymere. Zur Anwendung können auch alle Formen von Kombinationen von Polymeren, z.B. Copolymere, z.B. ein fluoriniertes Ethylen-Propylen Coploymer (FEP) oder Polymergemische kommen.

In Druckmaschinen wird die Druckqualität wesentlich durch die Beistellung (Kraftbeistellung) der Farbauftragwalzen zur Druckform und der Druckform zum Bedruckstoff beeinflusst. Die Beistellung kann sich durch Quellung oder Schrumpfung der beteiligten Materialien, durch Abnutzung, aber auch durch Lagerspiel während eines Druckauftrags oder auch über mehrere Druckaufträge hinweg, sich verändern, wodurch negative drucktechnische Effekte, wie schlechter Farbübertrag, erhöhte Tonwertzunahme, Beschädigung von sensitiven Bedruckstoffen und Druckformen und eine Vielzahl anderer unerwünschten Effekten erzeugt werden können. Um diese negativen Effekte zu verhindern bzw. deren Auswirkung innerhalb gewisser Toleranzgrenzen zu halten, muss der Maschinenbediener bei der Neueinrichtung eines Auftrages, bei der Maschinenwartung oder bei drucktechnischen Problemen einen hohen Aufwand für die Justage der betroffenen Elemente vornehmen.

Dem Entgegenzuwirken wurde angeregt zum Beispiel die Walzenlager einer Offsetrotationsdruckmaschine mit Piezoelementen für die Beistellungskorrektur zu verwenden. Die gefundene Lösung hat jedoch den Nachteil, dass die Messung und Korrektur der Beistellung nicht flächig erfolgt, d.h. eine Balligkeit einer Walze nicht erfasst. Außerdem ist die gefundene Lösung nur auf die Wirkstelle zwischen Farbauftragwalze und Druckform beschränkt, ermöglicht aber nicht die Messung der Übertragsstelle zwischen Druckform und Bedruckstoff bzw. Druckform und Gummituchzylinder.

Die Problematik der Beistellungskorrektur findet sich bei allen Impact-Druckverfahren, bei denen die Druckform direkt oder indirekt über einen Zwischenträger berührend mit dem Bedruckstoff in Verbindung steht. Sie kann auch bei allen Druckverfahren Anwendung finden, bei denen die Einfärbung der Druckform mittels einer oder mehrerer Farbauftragwalzen erfolgt.

Die Verwendung von Elektreten in Druckmaschinen ist aus der EP 1 493 565 A1 bekannt geworden.

Das führende Druckverfahren für den Verpackungs-, Akzidenz- oder Zeitungsdruck ist der Offsetdruck. Offsetdruckwerke bestehen aus einem Farbwerk mit einer oder mehreren Farbauftragwalzen zum Einfärben der Druckform,

Aufgabe der Erfindung ist es Wege und Verfahren zur Messung der Kraftbeistellungen an den Farbübertragsstellen unter Nutzung von polymeren zellularen Elektreten zu finden. Zusätzlich werden Verfahren zur Beistellungskorrektur, zur Automatisierung der Rüst- und Einstellvorgänge und zur Sicherung einer in engen Toleranzgrenzen stabilen Druckproduktion gefunden.

Die erfindungsgemäße Lösung ergibt sich aus den kennzeichnenden Merkmalen des Anspruchs 1.

Weiterbildungen ergeben sich aus den jeweiligen Unteransprüchen.

Erfindungsgemäß ist vorgesehen, dass die Beistellung einer Farbauftragwalze oder mehrerer Farbauftragwalzen gegenüber einer Druckform oder ein Kraftäquivalent der Beistellung der Farbauftragwalzen gegenüber der Druckform mittels einer piezoelektrischen Elektretfolie erfasst wird.

Im Folgenden wird die Erfindung anhand einer Zeichnung in einem Ausführungsbeispiel näher dargestellt.

Die Beistellung von Farbauftragwalzen zur Druckform und der Druckform zum Bedruckstoff bzw. zu einem Zwischenträger, zum Beispiel einem Gummituchzylinder eines Offsetdruckwerkes kann unabhängig von dem Druckverfahren gelöst werden, indem unter der Druckform eine polymere zellulare Elektretfolie 1 gespannt oder in einer anderen geeigneten Art auf dem Druckformzylinder befestigt wird. Eine alternative Befestigungsmöglichkeit neben dem Spannen mit einer Spannvorrichtung wäre zum Beispiel das partielle oder flächige Kleben auf dem Druckformzylinder. Über die polymere Elektretfolie 1 würde dann die Druckform gespannt oder im Falle einer Hülsendruckform (Sleeve) geschoben. Die Elektretfolie 1 kann aber auch Bestandteil der Druckform sein.

Über die Beistellung der Farbauftragwalze oder der Farbauftragwalzen wird durch die Druckform hindurch ein Druck auf das Elektret ausgeübt, wodurch Piezoelektrizität entsteht, die über die Elektroden, die flächig oder matrixförmig angeordnet sein können, abgegriffen werden kann. Über die Spannung kann direkt oder unter Ausnutzung einer Kennlinie oder ein Berechnungsvorschrift kann dann die mechanische Beistellung bzw. der durch die Walze auf die Druckform ausgeübte Druck flächig oder an einem oder mehreren Punkten bestimmt werden. Im Gegensatz zu der Bestimmung der Kraftbeistellung über die Walzenlager erfolgt somit eine Beistellungsbestimmung direkt am Wirkort, mit dem Vorteil, dass Lagerspiele oder Walzenverspannungen oder Walzendurchbiegungen durch die Messung über die gesamte Walzenbreite oder an mehreren Orten über die Walzenbreite auch mit gemessen und somit berücksichtigt werden können. Es lässt sich sogar mit einer Elektretfolie 1 unterhalb der Druckform bei mehreren Farbauftragwalzen die Beistellung jeder einzelnen Farbauftragwalze bestimmen, indem die Messung mit einem rotationssymmetrischen Signal, das zu Beispiel von einem Drehwinkelgeber stammt, der mit der Druckmaschine verbunden ist, kombiniert wird. Da einem bestimmten Wirkort zu einem definierten Zeitpunkt immer nur eine Walze anliegt, kann über das rotationssymmetrische Signal die Kraftbeistellung einer einzelnen Walze zugeordnet werden. Dieses Verfahren lässt sich äquivalent auf die Beistellung einer oder mehrerer Farbauftragwalzen gegenüber einer Offsetdruckform oder im Falle des Flexodrucks die Beistellung der Einfärbewalze, zum Beispiel einer Rasterwalze, gegenüber der Flexodruckform anwenden.

Dieses Verfahren hat den Vorteil, dass einerseits während des Rüstvorgangs eine optimale Kraftbeistellung zwischen Farbauftragwalze bzw. Farbauftragwalzen bzw. Einfärbewalze und der Druckform automatisiert gefunden werden kann. Dazu werden zum Beispiel über eine mechanische Beistellung, über aktorische Anstellung oder über einen elektrischen Antrieb die Walze solange gegenüber der Druckform an- bzw. abgestellt, bis das von der Elektretfolie 1 abgegebene Spannungsäquivalent oder eine davon abgeleitete Kenngröße einem vorgegebenen Sollwert entspricht, der zum Beispiel in einem Datenspeicher abgelegt ist. Die Beistellungsvorgaben können dabei auch verändert werden (zum Beispiel durch Benutzereingaben am Maschinenleitstand oder durch ein Expertensystem, das zum Beispiel Drucksujetaufbau, Druckverfahren und Farbeigenschaften berücksichtigt).

Die Beistellungsoptimierung mit den Elektretfolien 1 kann dabei während des Maschinenstandes erfolgen, da polymere Elektretfolien 1 eine gegenüber keramischen Piezosensoren lange Messzeit von bis zu 100 s erlauben. Keramische Piezosensoren erlauben dagegen nur eine sehr kurze Messzeit, die sich im Wesentlichen auf die Auswertung einer Impulsantwort bezieht. Die Einstellung während des Rüstvorgangs kann aber auch bei einer drehenden Maschine erfolgen.

Der erfindungsgemäße automatisierte Rüstvorgang erlaubt von Anbeginn des Druckauftrags eine optimale Druckqualität, wodurch der Ausschuss (Makulaturen) deutlich vermindert werden kann. Zudem werden Rüstvorgänge deutlich verkürzt, da der automatisierte Rüstzeitvorgang an allen Druckwerken gleichmäßig erfolgen kann und der Maschinenbediener nicht mühsam den Walzenabdruck der einzelnen Walzen auf der Druckform visuell beurteilen muss.

Besonders elastomere Farbauftragwalzen erfahren während des Fortdrucks durch Erwärmung und / oder chemische Einwirkung von Druckfarbe und / oder Waschmittel Dimensionsveränderungen im Durchmesser, die sich drucktechnisch unter anderem durch Veränderung der Farbspaltung, unterschiedliche Wärmentwicklung, veränderte Tonwertzunahme auswirken können. Durch die Möglichkeit die Beistellung auch während des Fortdruck zu messen, kann die Beistellung der Farbauftragwalze permanent oder in bestimmten diskreten Abständen gemessen und gegebenenfalls korrigiert werden. Dadurch wird auch im Fortdruck eine gleichmäßigere Qualität gewährleistet. Die Messung der Beistellungen kann permanent, in bestimmten diskreten Zeit- oder Auflagenabständen oder auf Anforderung geschehen. Bei der Messung auf Anforderung wird zum Beispiel ein Signal an eine Auswerteeinheit gesandt, dass auf Anforderung die aktuellen Beistellungen durch die Messung mit der Elektretfolie, die unter der Druckform angeordnet ist, bestimmt.

Die an den Elektroden unter der Belastung anliegende Spannung oder ein davon abgeleiteter Wert kann über Kontaktschleifen oder über telemetrische Verfahren an eine Empfangsstation übertragen werden, in der die Auswertung und eventuell weitere notwendige Berechnungsschritte erfolgen. Nach der Auswertung der erfassten Messwerte erfolgt gegebenenfalls eine Sollwertvorgabe an einen Stellantrieb, der für die korrekte Beistellung der Farbauftragwalzen sorgt. Der Einstellvorgang kann dabei in einem Schritt oder iterativ erfolgen.

### Bezugszeichenliste

- 1: geschlossenzellige Elektretfolie
- 2: Zellen mit Dipolstruktur
- 3: Oberfläche der Elektretfolie
- 4: Druckspannung
- 5: Spannungs-/ Ladungsmessung über Elektroden

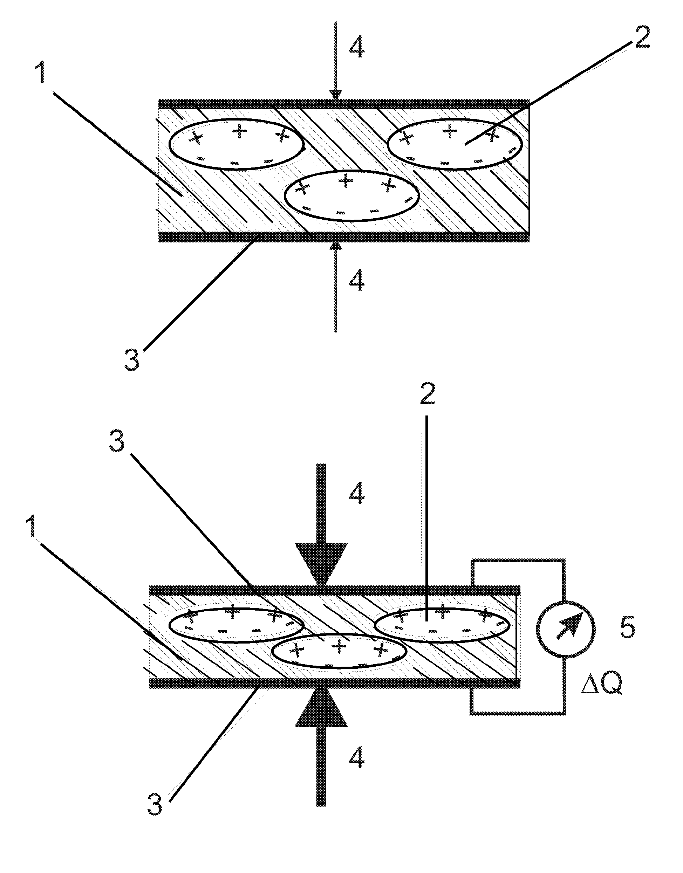

## Patentansprüche

1. Druckmaschine mit mindestens einer Druckform, die auf einem Druckformzylinder gespannt, geklebt oder als Sleeve (Hülsendruckform) ausgeführt ist und mindestens einer Farbauftragwalze zum Einfärben der Druckform, wobei die Beistellung der Farbauftragwalze gegenüber der Druckform über einen mechanischen, elektrischen oder piezoelektrischen Aktuator erfolgt,
**gekennzeichnet dadurch,**
**dass** die Beistellung einer oder aller Farbauftragwalze/-walzen gegenüber der Druckform oder ein Kraftäquivalent der Beistellung einer oder aller Farbauftragwalze/-walzen gegenüber der Druckform mittels einer piezoelektrischen Elektretfolie (1) erfasst wird.

2. Druckmaschine nach Anspruch 1,
**gekennzeichnet dadurch,**
**dass** die Elektretfolie als eine zellulare polymere Elektretfolie (1) ausgebildet ist, wobei innerhalb der polymeren Elektretfolie (1) Zellen (2) mit Dipolladungen vorgesehen sind.

3. Druckmaschine nach Anspruch 1 oder 2,
**gekennzeichnet dadurch,**
**dass** die polymere Elektretfolie (1) bei der Herstellung bi- oder monoaxial gereckt wurde, wodurch Zellen (2) mit diskus- oder linsenförmiger Struktur entstehen.

4. Druckmaschine nach Anspruch 1 oder 2,
**gekennzeichnet dadurch,**
**dass** die Elektretfolie (1) durch eine Spannvorrichtung oder durch einen Haftvermittler auf dem Druckformzylinder fixiert wird.

5. Druckmaschine nach Anspruch 1 oder 2,
**gekennzeichnet dadurch,**
**dass** die Elektretfolie (1) Bestandteil der Druckform ist oder mit dieser haftend verbunden ist.

6. Elektretfolie zum Einsatz in einer Druckmaschine nach einem oder allen der Ansprüche 1 bis 6,
**gekennzeichnet dadurch,**
**dass** die Elektretfolie (1) ein- oder beidseitig eine zusätzliche Oberflächenversiegelung aufweist.

7. Elektretfolie nach Anspruch 6,
**gekennzeichnet dadurch,**
**dass** die Oberfläche (3) der Elektretfolie (1) vorzugsweise geschlossen ist und keine oder nur eine geringe Zellenstruktur aufweist.

8. Elektretfolie nach Anspruch 6,
**gekennzeichnet dadurch,**
**dass** die Elektretfolie (1) eine oder mehrere Elektroden aufweist, über die elektrische Spannungen oder Ladungen (5) abgegriffen werden können.

9. Elektretfolie nach Anspruch 8, **gekennzeichnet dadurch, dass** mehrere Elektroden matrixförmig auf der Elektretfolie angeordnet sind.

10. Druckmaschine nach Anspruch 1 bis 6 mit einer Elektretfolie nach Anspruch 8,
**gekennzeichnet dadurch,**
**dass** Elektroden an bestimmten Orten im Umfang des Druckformzylinders auf der Elektretfolie (1) angeordnet sind, so dass die jeweilige Ort in Kombination mit einem rotationssymmetrischen Signal, das zum Beispiel über einen Drehwinkelgeber der Druckmaschine stammt, einer bestimmten Farbauftragwalze zugeordnet werden kann.

11. Druckmaschine nach Anspruch 1 bis 6 mit einer Elektretfolie nach Anspruch 8,
**gekennzeichnet dadurch,**
**dass** die Elektroden nur an einer Stelle im Umfang angeordnet sind, so dass durch die Abfolge der einzelnen Kraftausübung, gegebenenfalls in Kombination mit einem rotationssymmetrischen Signal, das von der Druckmaschine stammt, einer Farbauftragwalze zugeordnet werden kann.

12. Druckmaschine nach Anspruch 1 bis 6 mit einer Elektretfolie nach Anspruch 8,
**gekennzeichnet dadurch,**
**dass** die gewonnenen Signale bzw. elektrischen Spannung kontaktend, zum Beispiel über Schleifkontakte, oder per Telemetrie (Funkübertragung) einer Auswerteeinheit zugeführt werden.

13. Druckmaschine nach Anspruch 12,
**gekennzeichnet dadurch,**
**dass** in der Auswerteeinheit die gewonnenen Signale anhand von Berechnungsvorschriften, Kennlinien oder unter Ausnutzung eines Expertensystems ausgewertet werden.

14. Druckmaschine nach Anspruch 12 bis 13,
**gekennzeichnet dadurch,**
**dass** die Messeinrichtung, bestehend aus der Elektretfolie (1), einer Datentransfer- und einer Auswerteeinheit, mit einer aktorischen Farbauftragwalzenbeistellung gegenüber der Druckform in einem geschlossenen Regelkreis zusammenwirkt.

15. Druckmaschine nach Anspruch 12 bis 13,
**gekennzeichnet dadurch,**
**dass** die Messeinrichtung bestehend aus der Elektretfolie (1), einer Datentransfer- und einer Auswerteeinheit, gegebenenfalls eine Abweichung von einem Sollbeistellungswert ermittelt und diese Abweichung am Maschinenleitstand der Druckmaschine in einer geeigneten Form, zum Beispiel als einen Zahlenwert, ausgibt.
